(19)

Europäisches
Patentamt
European
Patent Office
Office européen
des brevets

(11) **EP 4 116 667 A1**

(12) **EUROPEAN PATENT APPLICATION**

(43) Date of publication:
**11.01.2023 Bulletin 2023/02**

(21) Application number: **21184706.6**

(22) Date of filing: **09.07.2021**

(51) International Patent Classification (IPC):
**G01B 9/02** *(2022.01)*    **G01B 11/24** *(2006.01)*
**G01B 11/06** *(2006.01)*

(52) Cooperative Patent Classification (CPC):
**G01B 9/02007; G01B 9/02057; G01B 9/02065;
G01B 11/0608; G01B 11/2441**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **TAYLOR HOBSON LIMITED
Leicester LE4 9JQ (GB)**

(72) Inventors:
• **DRABAREK, Pawel
75233 Tiefenbronn (DE)**

• **AM WEG, Christian
64289 Darmstadt (DE)**
• **EISWIRT, Peter
55129 Mainz (DE)**
• **MAY, Thilo
64287 Darmstadt (DE)**

(74) Representative: **Weilnau, Carsten et al
Patentanwälte Sturm Weilnau Franke
Partnerschaft mbB
Unter den Eichen 5 (Haus C-Süd)
65195 Wiesbaden (DE)**

(54) **THREE- WAVELENGTHS INTERFEROMETRIC MEASURING DEVICE AND METHOD**

(57)    The disclosure relates to an interferometric measuring device (10) for measuring a surface (2, 4) or profile of an object (1), the measuring device (10) comprising:

- a beam generating unit (20) comprising at least a first light source (21), wherein the beam generating unit (20) is operable to generate a measurement beam (BM) with a spectral component at a wavelength smaller than 550 nm,
- a splitter (55) to branch off an object beam (BO) and a reference beam (BR) from the measurement beam (BM),
- a measurement probe (50) connected to the beam generating unit (20), configured to direct the object beam (BO) onto the surface (2, 4) and to capture a portion of the object beam reflected from the surface (2, 4) as a signal beam (BS),
- an optical beam recombiner (56) operable to recombine the signal beam (BS) and the reference beam (BR) in an analysis beam (BA),
- a beam divider unit (60) operable to extract a first partial beam (BP1) of a first center wavelength $\lambda_1$ from the analysis beam (BA) and to extract a second partial beam (BP2) of a second center wavelength $\lambda_2$ from the analysis beam (BA),
- a detector unit (70) comprising at least a first detector (71) to detect the first partial beam (BP1) and comprising at least a second detector (72) to detect the second partial beam (BP2),
- a signal analyzer (80) connected to the detector unit (70) and operable to derive a distance (D) between the measurement probe (50) and the surface (2, 4) on the basis of signals obtained from the at least first detector (71) and the at least second detector (72).

Fig. 1

## Description

Technical field

The present disclosure relates to an interferometric measuring device for measuring a surface or profile of an object, e.g. of an optical element. In a further aspect the disclosure relates to a method of measuring a surface or profile of an object. In another aspect the present disclosure relates to an interferometric measuring device and to a respective method of measuring a surface or profile of an object, wherein the respective surface is provided with a coating or is covered by a coating.

Background

Contactless measuring of surfaces or profiles of objects, e.g. of optical elements, such as lenses are as such well-known and established in the art. With an interferometric setup a measurement optical beam is divided into a reference beam and into an object beam, wherein the object beam is directed onto the surface of the object and is reflected as a signal beam from the surface of the object. When recombining the signal beam and the reference beam an optical interference can be observed being indicative of a runtime difference and hence of a path difference between the reference beam and the signal the.

A measurable phase shift between the signal beam and the reference beam is unequivocal only within a range as defined half of the wavelength. As the path difference between the signal beam and the reference beam is larger than half of the wavelength of the measurement beam the respective interference pattern as generated by the recombination of the signal beam and the reference beam repeats. The absolute distance range of such an interferometric setup is therefore generally rather limited. To increase the spatial measurement range there may be used longer wavelengths, e.g. in the infrared spectral range.

Moreover when an object, e.g. an optical element should be provided with a coating on a surface to be measured the coating may be comparatively thin and may comprise a thickness in the range of only a few micrometers or even below 1 $\mu$m. Then and when the coating is substantially transparent for the wavelength of the measurement beam there will arise a first reflection on an outside surface of the coating and a second reflection, e.g. on or from an inside or lower surface of the coating, which is in direct contact with an outside surface of the object. For an interferometric measuring device and method it is quite difficult if not impossible to distinguish between those first and second reflections emanating from opposite sides of such a coating.

It is therefore desirable to provide an improved interferometric measuring device and an improved method of measuring a surface or profile of an object that allows a precise surface or profile measurement even when the object should be provided with a coating on its surface that is intended to be measured. Moreover, the interferometric measuring device may have to operate with a measurement beam in the visible spectral range. It is hence desirable to provide a cost efficient, highly reliable, long-lasting and robust solution to enable interferometric measurement of coated surfaces. At the same time the improved interferometric measuring device should provide a comparatively large measurement range for measuring absolute distances between the device and the surface of the object.

The interferometric measuring device should be universally adaptable and should be reconfigurable in an easy and straightforward manner in order to match or to adapt to different and varying measurement conditions. The interferometric measuring device and method should be robust also against environmental influences and perturbations.

These demands are generally solved by an interferometric measuring device and by a method of measuring a surface or profile of an object in accordance to the subject matter of the independent claims. Numerous embodiments are subject of dependent claims.

In one aspect there is provided the interferometric measuring device for measuring a surface or profile of an object, such as an optical element, e.g. a lens or a mirror. The interferometric measuring device comprises a beam generating unit. The beam generating unit comprises at least a first light source. The beam generating unit and hence the first light source is operable to generate a measurement beam. The measurement beam comprises a spectral component at a wavelength smaller than 550 nm. Typically, the measurement beam comprises a center wavelength in a region smaller than 500 nm, typically larger than 380 nm. The wavelength of the measurement beam is typically in the visible spectral range below 550 nm.

The interferometric measuring device further comprises a splitter to branch off an object beam and a reference beam from the measurement beam. With some examples the splitter may be configured or operable to split the measurement beam into the object beam and into the reference beam. The measuring device further comprises a measurement probe coupled to the beam generating unit in a light transmitting way. With some examples the measurement probe is optically coupled to the beam generating unit by at least one optical fiber. With other examples the measurement probe is optically coupled to the beam generating unit by an optical arrangement providing a free propagation of the measurement beam from the beam generating unit to the measurement probe.

The measurement probe is configured to direct the object beam onto the surface of the object and to capture a portion of the object beam reflected from the surface as a signal beam.

Typically, the signal beam comprises or is a portion of the object beam that has been reflected on the surface of the object to be measured. The interferometric measuring device further comprises an optical recombiner operable to recombine the signal beam and the reference beam into an analysis beam. Typically, the analysis beam comprises a superposition of the reflected signal beam and the reference beam. The analysis beam is subject to interference and exhibits interference fringes or an interference pattern being indicative of the path difference between the reference beam and the signal beam, hence that portion of the object beam that has been reflected by the surface and that has been captured by the measurement probe.

With some examples the optical beam recombiner is integrated into the splitter and/or other splitter is integrated into the optical beam recombiner. Hence, there may be a single optical component or optical fiber that provides both, the splitter and the optical beam recombiner. With some examples, it is a fiber end face of an optical fiber that provides both, a splitter and an optical beam recombiner. Typically, a fiber end face terminating inside the measurement probe serves as a splitter to generate a reference beam and an object beam from the measurement beam and to recombine the signal beam reflected from the surface of the object with the reference beam.

The interferometric measuring device further comprises a beam divider unit coupled to the optical beam recombiner and/or coupled to the measurement probe in a light transmitting way. With some examples the beam divider unit is optically coupled to the optical beam recombiner and/or to the measurement probe by at least one optical fiber. With other examples the beam divider unit is optically coupled to the optical beam recombiner and/or to the measurement probe by an optical arrangement providing a free propagation of respective optical beams.

The beam divider unit is operable to extract a first partial beam of a first center wavelength from the analysis beam and to extract a second partial beam of a second center wavelength from the analysis beam. Typically, the second center wavelength differs from the first center wavelength in a well-defined way. The interferometric measuring device further comprises a detector unit coupled to the beam divider unit in a light transmitting way, e.g. through at least one optical fiber. With other examples, the detector unit is optically coupled to the beam divider unit by way of an optical arrangement providing a free propagation of respective optical beams. The detector unit comprises at least a first detector to detect the first partial beam and further comprises at least a second detector to detect the second partial beam.

Typically, and since the measurement beam as provided and generated by the beam generating unit comprises a spectral component at a wavelength smaller than 550 nm at least one of the first center wavelength and the second center wavelength is in a spectral range below 550 nm. With some examples, both, the first center wavelength and the second center wavelength is in a spectral range below 550 nm.

Finally, the interferometric measuring device comprises a signal analyzer connected to the detector unit in a signal transferring manner. The signal analyzer is operable to derive or to calculate a distance between the measurement probe and the surface on the basis of signals obtained from the at least first detector and the at least second detector.

Typically, each of the first and the second detectors is connected to the signal analyzer in a separate way. Thus, the signal analyzer comprises a first input connected to the first detector and further comprises a second input connected to the second detector. While the first input the signal analyzer receives measurement signals from the first detector being indicative of an interference signal as measured for the first center wavelength, the signal analyzer comprises a second input connected to the second detector so as to analyze signals as provided by the second detector when detecting respective optical signals at the second center wavelength.

The interferometric measuring device provides a multi-wavelength interferometric measurement of the surface of the object. By making use of a first wavelength and by a second wavelength the overall measurement range of the measuring device can be increased.

In effect, and by making use of a second beam or by making use of signal analysis on the basis of at least two optical frequencies a synthetic wavelength defined by the two measuring wavelength can be created, thus increasing the spatial range of the interferometric measuring device. By using a larger (synthetic) wavelength the range for an unequivocal and hence absolute distance measuring can be increased at the expense of spatial resolution and measurement precision.

Moreover, by having a separate signal analysis on the basis of a first center wavelength and on the basis of a second center wavelength there can be provided a synthetic wavelength being larger or much larger than the first and the second wavelengths so as to increase an unequivocal measurement range of the interferometric measuring device. Moreover, and since the measurement beam comprises a spectral component at a wavelength smaller than 550 nm the interferometric measuring device operates in the visible spectral range. When an optical coupling between any of the beam generating unit, the measurement probe, the beam divider unit and the detector unit is provided by at least one optical fiber, respective optical fibers are particularly configured for optical beam propagation and beam transmission for this particular wavelength or spectral range.

Operation of the interferometric measuring device in the visible spectral range is beneficial in many aspects. Since the measurement beam and hence also the reference and the object beam are in the visible spectral range an operator of the interferometric measuring device may visually inspect, if and in how far the object beam correctly hits the surface of the object to be measured. Hence, use of visible radiation provides an easy and straightforward control of operation of the interferometric measuring device.

In a further aspect and when the object is for instance coated with a coating comprising at least one of silicon or diamond-like carbon DLC use of radiation in a spectral range smaller than 550 nm is of particular benefit since the coating is substantially absorbent for this particular spectral range. Then, unwanted or undesired reflections from the interface between the coating and the respective outside surface of the object can be effectively suppressed and attenuated or damped.

The signal beam as reflected by the object is mainly provided or constituted by a reflection that occurs on the outside surface of the coating. A portion of the object beam entering or propagating through the coating will be hardly reflected by the surface of the underlying object because the coating is effectively absorbent for this particular wavelength or spectral range.

Nowadays there is only a limited availability of light sources operating in the desired spectral range below 550 nm that could be used for interferometric applications. The light source should or must provide a sufficient degree of spatial coherence so as to enable an interferometric measurement between the reflected signal beam and the reference beam. Furthermore, light sources for interferometric applications should or must be extremely stable with regard to their center wavelength. Moreover, the light source should be commercially available at moderate or low costs.

Generally, there may be provided only one light source with the beam generating unit. Here, a rather broadband light source may be implemented and used. The beam divider unit may be then operable to extract a first partial beam of the first center wavelength and the second partial beam of the second center wavelength and to separately provide first and second partial beams to the detector unit. This way, a signal analysis may be conducted and performed on the basis of first and second and hence different center wavelengths thus allowing to increase the measurement range of the interferometric measuring device.

According to a further example the splitter, which is operable to branch off an object beam and a reference beam from the measurement beam, comprises a fiber end face or is formed by a fiber end face, e.g. provided in or on the measurement probe.

With some examples, the measurement probe is connected to the beam generating unit through at least one optical fiber. Here, a fiber end face of the optical fiber located in the measurement probe may serve as the splitter. A portion of the measurement beam propagating through the optical fiber is emitted through the fiber end face and propagates towards the object as the object beam. Another portion of the measurement beam is reflected by internal reflection at the fiber end face as the reference beam.

With some examples the fiber end face is provided or coated with a reflective coating in order to increase the intensity of the reference beam reflected at the fiber end face. In a typical scenario of use and when the surface of the object is highly absorbent for the object beam and/or when the object comprises a comparatively large refractive index, the intensity of the signal beam reflected at the surface of the object may be comparatively large. In order to obtain a good signal-to-noise ratio for the interference in of the analysis beam it is of particular benefit to increase the intensity or the portion of the reference beam in comparison to the object beam.

With some examples and with regards to at least one of the first and the second center wavelengths the coating as provided on the fiber end face and/or on or in the splitter is configured and/or effective to generate a reference beam comprising an intensity of 5%-60% of the intensity of the measurement beam, to generate a reference beam comprising an intensity of 17.5 %- 45 % of the intensity of the measurement beam, to generate a reference beam comprising an intensity of 23.25 %- 37.5 % of the intensity of the measurement beam, or to generate a reference beam comprising an intensity of 25% - 35 % of the intensity of the measurement beam.

In this way, the intensity of the reference beam reflected at the coated reflector, e.g. at the coated fiber end face can be increased compared to solutions without a reflective coating. Consequently, the intensity of the reference beam may closely match the intensity of the signal beam reflected at the surface of the object and captured by the measurement probe.

According to a further example the beam generating unit comprises a second light source. The second light source is operable to emit electromagnetic radiation comprising a spectral component at the second center wavelength. Typically, and when there are provided at least two light sources with the beam generating unit the first light source of the beam generating unit may be operable to emit electromagnetic radiation comprising a spectral component at the first center wavelength. Typically, and with further examples the first and second light sources of the beam generating unit may be configured or may be operable to emit electromagnetic radiation at the respective first center wavelength and at the second center wavelength, respectively.

Hence, the spectral properties of first and second light sources may be adapted to and may closely match the beam divider unit, by way of which first and second partial beams of first and second center wavelengths are extracted from the analysis beam.

With other examples it is also conceivable that the first and second light sources are implemented as broadband or narrow band light sources and that respective first and second partial beams with first and second center wavelengths are particularly extracted by the beam divider unit.

Nevertheless and with a close matching of the emission spectra of first and second light sources with the beam divider unit being operable to extract respective spectral component from the analysis beam, also the entire beam guiding system of the interferometric measuring device may be particularly adapted and configured to provide a rather undamped and lossless beam propagation, e.g. through various optical fibers by way of which the beam generating unit, the splitter, the measurement probe, the optical beam recombiner, the beam divider unit and the detector unit are coupled or connected.

According to a further example the beam divider unit is operable to extract a third partial beam of a third center wavelength from the analysis beam. The third center wavelength is different from the first center wavelength. It is also different from the second center wavelength. The difference between first, second and third center wavelengths is well defined and is known to the signal analyzer so as to provide a precise signal analysis and distance calculation between the measurement probe and the surface of the object to be measured.

When the beam divider unit is operable to extract first, second and third partial beams the detector unit optically coupled to the beam divider unit also comprises a third detector to detect the third partial beam. Likewise, the third detector is also connected to the signal analyzer. With this example the signal analyzer is individually connected or coupled to the first, the second and the third detectors of the detector unit so as to enable a wavelength selective or wavelength specific interference analysis of the analysis beam.

With still another embodiment the beam divider unit is operable to extract a fourth partial beam of a fourth center wavelength from the analysis beam. The fourth center wavelength is different from the first center wavelength, the second center wavelength and is also different from the third center wavelength. Also here, the detector unit comprises a fourth detector to detect the fourth partial beam. Generally, the multi-wavelength interferometric measuring device is not limited to only two, three or four discrete wavelengths. It may be implemented also on the basis of 5, 6, 7, 8 or up to 10 or even up to 12, 14, 16 or 20 different discrete wavelengths for the signal analysis of the analysis beam.

According to another example the beam generating unit comprises a third light source. The third light source is operable to emit electromagnetic radiation comprising a spectral component at the third center wavelength. Like the first and the second light sources also the third light source may be one of a broadband light source having or exhibiting a substantial light intensity at the third center wavelength. Alternatively, the third light source may be a narrowband light source, such as a laser emitting a substantial beam intensity at the third center wavelength.

With a further example of the measurement device the first light source comprises one of a laser and a superluminescent diode SLD. Typically, when implemented as a laser the first light source provides a measurement beam with a rather small spectral range. Here, the measurement beam exhibits a rather long coherence length, e.g. in the region of several meters. When implemented as a laser, e.g. as a solid-state laser, or as a semiconductor laser the first light source provides a substantial light intensity at the first center wavelength.

When implemented as a broadband light source, e.g. when implemented as a superluminescent diode, the first light source emits a rather broadband spectrum compared to a laser light source. Here, the spatial coherence length is much shorter compared to light source implemented as a laser. Broadband light sources, such as SLD are available at the desired spectral range below 550 nm at reasonable costs. Both, a laser light source as well as a superluminescent light source may provide sufficient temporal stability over several hours of operation. Typically, the light sources used or usable with the present interferometric measuring device exhibit a long-term stability or a long-term drift of their center wavelength which is smaller than 5 pm over or 8 hours, preferably smaller than 3 pm over 8 hours or even smaller than 2 pm over a time interval of at least 8 hours.

According to another example the second light source comprises one of a laser and a luminescent diode. Insofar, when the beam generating unit comprises a first light source and a second light source, both light sources may be either implemented as a laser, wherein the first laser is operable to emit radiation at a first center wavelength and wherein the second laser is operable to emit electromagnetic radiation at the second center wavelength. With some examples the first light source may be implemented as a laser and the second light source may be implemented as a superluminescent diode.

Here, the first light source may be operable to emit electromagnetic radiation at the first center wavelength whereas the second light source emits electromagnetic radiation in a spectral range comprising a spectral component at the second center wavelength. With some examples, the roles of first and second light sources may be switched so that the first light source is implemented as a superluminescent diode and the second light source is implemented as a laser.

According to a further example the third light source comprises one of a laser and a superluminescent diode. Here, and when implemented as a laser the third light source is operable to emit electromagnetic radiation at the third center wavelength. When implemented as a superluminescent diode the third light source is operable to generate a measurement beam with a spectral component at the third center wavelength.

With some examples the first, the second and the third light sources are e.g. each implemented as a laser operable to emit electromagnetic radiation at the first, the second and the third center wavelength, respectively. With some examples, one of the first, the second and the third light sources is implemented as a laser. The other two light sources are implemented as individual superluminescent diodes. With further examples it is even conceivable, that at least two of the light sources of the beam generating unit each comprise a laser so as to emit electromagnetic radiation e.g. at the first center wavelength and at the second center wavelength, respectively. The third light source may be implemented as a superluminescent diode.

In still another example the first, second and the third light sources are e.g. each implemented as an individual superluminescent diode. Typically, each of the superluminescent diodes may exhibit a different or distinguishing spectral range compared to the other of the superluminescent diodes.

Depending on the particular configuration of the beam generating unit comprising at least one, two or three individual light sources and depending on the respective configuration of the respective light sources, e.g. implemented as a laser or as a superluminescent diode, the beam generating unit may comprise at least one or several optical coupler, by way of which the respective electromagnetic radiation as generated by the individual light sources can be coupled in a single optical fiber so as to transmit the respective multicomponent measurement beam towards the measurement probe.

According to a further example the at least one light source comprises a superluminescent diode. The measurement device then further comprises an optical delay unit coupled to the at least one light source in a light transmitting way, e.g. through an optical fiber or by way of an optical arrangement providing free beam propagation. The optical delay unit is operable to impose a phase shift of variable and adjustable size onto at least one of the measurement beam, the signal beam, the object beam and the reference beam.

Typically, and when making use of a superluminescent diode as a light source in the beam generating unit the respective measurement beam may exhibit a rather short coherence length. With some examples the coherence length of the respective measurement beam may be shorter than the path difference between the splitter and the optical beam recombiner. Then, a recombination of the signal beam and the reference beam may be unable to mutually interfere.

By way of the delay unit at least one measurement beam, the signal beam, the object beam and the reference beam can be split into a non-delayed beam portion and a delayed beam portion, wherein only the delayed beam portion is imposed with a phase shift of variable and adjustable size. Typically, there may be imposed a supplemental optical path onto the delayed beam portion compared to the non-delayed beam portion. The delayed beam portion and the non-delayed beam portion then co-propagate through respective optical fibers.

With the measurement beam split into a delayed beam portion and a non-delayed beam portion there will be generated corresponding object beams, reference beams, signal beams analysis beam, each of which having a non-delayed portion and a delayed beam portion. With a light source of low coherence, it will then be a non-delayed portion of the signal beam that is able to interfere with a delayed portion of the reference beam. Respective non-delayed and delayed portions of the signal beam and the reference beam is subject to the same or to a substantially identical optical path length and are thus able to mutually interfere.

The delay imposed on one of the signal beam, the object beam and the reference beam may be chosen and tuned so as to correspond to the path difference between the reference beam and the signal beam. In this way, a measurement beam originally exhibiting a rather low degree of coherence or comprising a comparatively short coherence length, e.g. below 10 cm, below 1 cm, below 1 mm or even in a range of only a few hundred micrometers can still be used as a light source. The optical delay unit may be suitably configured so as to compensate the runtime difference between the reference beam and the signal beam.

With some examples the optical delay unit is provided upstream of the measurement probe. With other examples the delay unit is provided downstream of the measurement probe with respect to the propagation of the measurement beam and all further beams derived therefrom.

Generally, the optical delay unit can be installed at various positions in the interferometric measuring device. It can be arranged between the beam generating unit and the splitter. It can be arranged between the splitter and the measurement probe. It can be also arranged between the measurement probe and the beam divider unit.

According to a further example of the measuring device the first center wavelength $\lambda_1$ and the second center wavelength $\lambda_2$ fulfill the following equation:

$$\lambda_{SM} = n \cdot \lambda_1 = \frac{\lambda_1 \cdot \lambda_2}{|\lambda_1 - \lambda_2|} = m \cdot \lambda_2\,,$$

wherein $1 \leq n,m \leq 50$.

With some examples $5 \leq n,m \leq 35$. With further examples $10 \leq n,m \leq 20$.

Typically, and with some examples n and m are integer numbers. $\lambda_{SM}$ defines a first synthetic wavelength artificially generated by the signal analyzer upon analyzing first and second signals of the first and second detectors, respectively. Typically, the first synthetic wavelength is about 1 to 50 times larger than any of the first center wavelength $\lambda_1$ and the second center wavelength $\lambda_2$. This way, the measurement range in terms of the absolute distance measurement as provided by the interferometric measuring device can be increased.

Preferably, the first synthetic wavelength is about 5 to 35 times larger than any of the first center wavelength $\lambda_1$ and the second center wavelength $\lambda_2$. With such a choice of n and m the synthetic wavelength may be slightly decreased at the benefit of improving robustness and decreasing measurement fluctuations and measurement errors.

Most preferably, the first synthetic wavelength is about 10 to 20 times larger than any of the first center wavelength $\lambda_1$ and the second center wavelength $\lambda_2$. With such a choice of n and m the synthetic wavelength may be further decreased at the benefit of further improving robustness and further decreasing measurement fluctuations and measurement errors.

The signal analyzer is operable to determine a relative phase between the signal beam and the reference beam in terms of at least one of the first center wavelength and the second center wavelength. This kind of analysis provides the highest measurement precision but comes along with the shortest absolute measurement range. When conducting signal analysis in terms of the first synthetic wavelength the absolute measurement range can be increased at the expense of the measurement resolution or measurement precision.

Typically, and with some examples the signal analyzer is operable to derive the distance between the measurement probe and the surface on the basis of an interference signal of the analysis beam in terms of at least one of the first center wavelength and the second center wavelength. The signal analyzer is further operable to determine the distance between the measurement probe and the surface of the object by evaluating an interference signal of the analysis beam in terms of the first synthetic wavelength.

Separate measurements and separate signal analysis conducted on the basis of the first synthetic wavelength on the one hand side and conducted on the basis of at least one of the first center wavelength and the second center wavelength on the other hand side provides an increase of the absolute measurement range without losing measurement precision or measurement resolution.

According to a further example of the measurement device the third center wavelength $\lambda_3$ and one of the first and the second center wavelengths $\lambda_1$ or $\lambda_2$ fulfill the following equation:

$$\lambda_{SG} = k \cdot \lambda_i = \frac{\lambda_i \cdot \lambda_3}{|\lambda_i - \lambda_3|} = l \cdot \lambda_3,$$

wherein $i$ = 1 or 2 and $10 \leq k,l \leq 2.500$. With some examples $50 \leq k,l \leq 1.000$. With further examples $100 \leq k,l \leq 500$.

Here, the third center wavelength $\lambda_3$ is located comparatively close to at least one of the first and the second center wavelengths. This way there is generated a second synthetic wavelength $\lambda_{SG}$, which is larger than the first synthetic wavelength $\lambda_{SM}$. With some examples the second synthetic wavelength $\lambda_{SG}$ is about 10 - 20 times larger than the first synthetic wavelength $\lambda_{SM}$. In this way the absolute measurement range of a distance measurement provided by the interferometric measuring device can be further increased. This second synthetic wavelength may as large at several centimeters or even meters.

When two of the at least first, second and third center wavelength are located rather close to each other, e.g. when the first center wavelength and the third center wavelength differ by less than 5 nm, less than 3 nm or even less than 2 nm there can be provided a rather large second synthetic wavelength by way of which the range of an absolute distance measurement as provided by the interferometer measuring device can be increased to several millimeters, several centimeters or even to a range of several meters.

Preferably, the second synthetic wavelength is about 50 to 400 times larger than any of the first center wavelength $\lambda_1$ and the second center wavelength $\lambda_2$. With such a choice of $k$ and $l$ the second synthetic wavelength can be increased thus providing a respective increase of the overall absolute measurement range of the measurement device.

Most preferably, the second synthetic wavelength is about 50 to 500 times larger than any of the first center wavelength $\lambda_1$ and the second center wavelength $\lambda_2$. With such a choice of $k$ and $l$ the second synthetic wavelength can be further increased thus providing a respective increase of the overall absolute measurement range of the measurement device.

According to a further example of the measurement device the beam divider is operable to extract a fourth partial beam at a fourth center wavelength $\lambda_4$ from the analysis beam. Additionally or alternatively the beam generating unit may comprise a supplemental light source operable to emit electromagnetic radiation comprising a spectral component at the fourth center wavelength $\lambda_4$.

Typically, and according to a further example, the fourth third center wavelength $\lambda_4$ and one of the first, the second and the third center wavelengths $\lambda_1$, $\lambda_2$, $\lambda_3$ fulfill the following equation:

$$\lambda_{SL} = h \cdot \lambda_i = \frac{\lambda_i \cdot \lambda_4}{|\lambda_i - \lambda_4|} = j \cdot \lambda_4,$$

wherein $i$ = 1, 2 or 3 and $100 \leq h,j \leq 250.000$. With some examples $500 \leq h,j \leq 100.000$. With further examples $1000 \leq h,j \leq 5.000$.

Here, the fourth center wavelength $\lambda_3$ is located comparatively close to at least one of the first, the second and the third center wavelengths. This way there is generated a third synthetic wavelength $\lambda_{SL}$, which is larger than any of the first synthetic wavelength $\lambda_{SM}$ and the second synthetic wavelength $\lambda_{SG}$. With some examples the third synthetic wavelength $\lambda_{SL}$ is about 10 - 20 times larger than the second synthetic wavelength $\lambda_{SL}$. In this way the absolute measurement range of a distance measurement provided by the interferometric measuring device can be further increased. This second synthetic wavelength may as large at several centimeters or even meters.

According to another example the first center wavelength, the second center wavelength and the third center wavelength are:

- in a spectral range between 380 and 490 nm,
- in a spectral range between 400 nm and 460 nm,
- in a spectral range between 404 nm and 455 nm,
- in a spectral range between 449 nm and 511 nm,
- in a spectral range between 449 and 489 nm, or
- in a spectral range between 404 and 475 nm.

Typically, the choice and/or combination of individual first, second and optional third or even fourth light sources depends on the measurement demands as well as on the quality and cost efficiency of commercial light source available on the market.

Preferably and according to further examples the first, the second and the third center wavelengths are all within the blue spectral range. They are located in the visible blue spectral range. Use of at least a first and a second center wavelength of the measurement beam for interferometric measurement of a surface or profile of an object in the blue spectral range, i.e. below 511 nm or below 500 is particularly beneficial for measuring an object, which is provided with a coating being substantially absorbent for this particular spectral range.

With some examples and when a SLD is implemented as a first light source and a laser is used as a second light source the first center wavelength may be about 450 nm and the second center wavelength may be about 473 nm.

With other examples and when first and second light sources are both implemented as a SLD the first center wavelength may be about 405 nm and the second center wavelength may be about 450 nm. Alternatively, the first center wavelength may be about 450 nm and the second center wavelength may be about 510 nm.

Further alternatively and when the first light source comprises a SLD and when the second and third light sources each comprise a laser, the first center wavelength may be about 450 nm, the second center wavelength may be about 473 nm and the third center wavelength may be about 480 nm.

Further alternatively and when the first and the second light sources are both implemented as a SLD and when the third light source is implemented as a laser, the first center wavelength is about 405 nm, the second center wavelength is about 450 nm and the third center wavelength is about 473 nm.

When making use of three individual light sources and wherein one of the light sources is implemented as a SLD, there may be easily derived four or even five different center wavelengths for signal detection and subsequent signal analysis.

According to a further example the object to be measured with the measurement device comprises a material on its surface that is substantially absorbent for electromagnetic radiation of at least one of the first and the second center wavelength. Typically, the material of the object is highly absorbent for electromagnetic radiation of at least one of the first, the second and the third center wavelength. With some examples the object comprises an optical element coated with a coating or with a coating layer. Typically, the coating of the object may comprise a layer thickness in a region of 1 μm to 10 μm, from 10 μm to 100 μm, between 20 μm and 80 μm or between 30 μm and 50 μm.

With further examples the object to be measured comprises a surface coated with a coating comprising a layer thickness of less than 10 μm. The material of the coating may be substantially absorbent for at least one of the first center wavelength, the second center wavelength and the optional third center wavelength. Typically, the choice of the first, the second and the optional third center wavelength depends on the type of material of the coating of the object to be measured. For a given object with a given coating the at least first and second center wavelengths are chosen in such a way, that the respective spectral components are effectively absorbed by the coating. With the term "substantially absorbent" for electromagnetic radiation of a particular center wavelength it is typically meant, that the intensity of electromagnetic radiation of the respective center wavelength, after propagating for 1 μm through the respective material or coating, drops to at least 50%, to at least 20% or to at least 10% or even to less than 10% of an initial intensity.

By making use of a first center wavelength and of a second center wavelength in the analysis of the analysis beam for which the coating material of the object is substantially absorbent any reflection potentially arising in the interface between the coating and an outside surface of the coated object can be effectively avoided. The signal beam reflected from the surface of the object is effectively reflected only from an outside surface of the coating. A portion of the object beam propagating into the coating is effectively absorbed and cannot be reflected any longer.

Selection of an appropriate wavelength in accordance to the absorption properties of a coating of a coated object is therefore finally beneficial to avoid any reflections from a lower side of the coating being in direct contact with an outside surface of the coated object.

According to a further example the measurement device comprises a coupler unit coupled to the beam generating unit in a light transmitting way, e.g. through an optical fiber. The coupling unit may be further connected to the measurement probe through another optical fiber and may be further connected to the divider unit through a further optical fiber. The coupler unit is configured to direct the measurement beam as provided by the beam generating unit from the beam generating unit to the measurement probe and to transmit or to direct any captured beam from the measurement probe to the divider unit. Typically, and with some examples the measurement probe is connected or coupled to the beam generating unit via the coupler unit and the measurement probe is connected or coupled to the beam divider unit via the coupler unit. With other examples, at least one of the optical couplings between the coupler unit, the measurement probe and the divider unit is implemented as an optical path that supports free beam propagation. This optical path may be void of optical fibers and may support free beam propagation.

With some examples, the splitter as well as the optical beam recombiner are implemented inside or on the measurement probe.

If the analysis beam is generated directly in the measurement probe the coupling unit is configured to direct the analysis beam from the measurement probe to the divider unit. With other examples and when the analysis beam is generated downstream of the measurement probe the optical unit may be configured to direct the signal beam from the measurement probe to the divider unit. The coupler unit may comprise a fiber optical coupler by way of which the measurement beam can be directed to the measurement probe and by way of which any beam captured by the measurement probe can be forwarded or directed to the divider unit.

With some examples the optical unit is implemented as an optical circulator. With further examples the optical unit is particularly adapted to couple and to redirect different beams of electromagnetic radiation at a given center wavelength. Typically, the coupling unit is optimized to couple and to redirect electromagnetic radiation of at least the first and the second center wavelength and optionally also of the third center wavelength from one optical fiber or optical element to another optical fiber or optical element.

According to a further example of the measurement device the divider unit comprises at least one of a wavelength division multiplexer WDM and a fiber splitter. The fiber splitter comprises a first output connected to a first optical filter. The fiber splitter further comprises a second output connected to a second optical filter. With some examples the divider unit effectively consists of a wavelength division multiplexer. Such a wavelength division multiplexer is operable to split the analysis beam into different spectral components, e.g. into a first spectral component at the first center wavelength and into a second spectral component of the second center wavelength. Optionally, the wavelength division multiplexer may be also operable to divide the analysis beam into three partial beams of the first center wavelength, of the second center wavelength and of the third center wavelength, respectively.

With a wavelength division multiplexer a loss of intensity can be reduced to a minimum. The first and the second detectors of the detector unit located downstream of the divider unit may then be provided with a maximum of available spectral intensity of the analysis beam.

When implemented as a fiber splitter with a first output connected to a first optical filter and a second output connected to a second optical filter the respective optical filters may comprise a transmission that matches with the first and the second center wavelength. Typically, the first optical filter is transmissive missive only for the first center wavelength. The second optical filter is only transmissive for the second center wavelength. The fiber splitter is operable to split an incoming beam into at least a first partial beam and a second partial beam, wherein the first and the second partial beams comprise a somewhat identical or substantially equal spectral distribution.

There may be even provided another fiber splitter by way of which an incoming analysis beam as provided by the measurement probe or as provided by the coupler unit is split into first, second and third partial beams. The first, the second and the third partial beams may be then directed onto respective first, second and third optical filters. By way of the respective optical filters a rather sharp center wavelength can be selected from the incident electromagnetic radiation. Use of optical filters inevitably comes along with a substantial decrease of electromagnetic intensity. But use of optical filters provides a rather short band and precise center wavelength for further signal analysis.

According to another aspect the present disclosure relates to a method of measuring a surface or profile of an object, e.g. of an optical element, which may be coated with a coating. The method comprises the steps of providing the object, wherein the object comprises a surface material. With some examples the surface material comprises a coating provided on a surface of the object. In a further step there is generated a measurement beam by a beam generating unit. There is branched off an object beam and a reference beam from the measurement beam. The object beam is then directed onto the surface of the object by an optical probe.

For a given wavelength of at least one of the object beam and the measurement beam the surface material comprises an optical absorption or optical penetration depth of less than 100 $\mu$m, less than 50$\mu$m, less than 20$\mu$m, less than 10 $\mu$m, less than 5 $\mu$m, less than 2 $\mu$m, less than 1 $\mu$m, less than 0.5 $\mu$m or less than 0.1 $\mu$m. Here, the optical penetration depth is defined by the thickness of a material at which the beam intensity has dropped to 1/e, i.e. to about 36% of an initial beam intensity.

Alternatively and according to another example the surface material comprises an absorption coefficient AC, wherein AC is between 500,000 cm$^{-1}$ and 5,000 cm$^{-1}$ (in words five hundred thousand and five thousand per cm$^{-1}$) for at least one of the object beam and the measurement beam.

There is further captured a portion of the measurement beam reflected by the surface of the object as a signal beam. Thereafter the signal beam reflected by the surface of the object, e.g. reflected by the outside surface of a coating of the optical element, is recombined with the reference beam. The recombined signal beam and the reference beam constitute an analysis beam. An interference of the analysis beam is then detected by a detector unit and a distance between the optical probe and the surface is derived by analyzing signals of the detector unit.

Typically, and according to further examples the wavelength of the object beam and/or or measurement beam is selected such that the intensity of an at least partially absorbed signal beam reflected at a lower surface of the object, which lower surface faces away the interferometric measuring device, is less than 5%, less than 2%, less than 1% or less than 0.5% of the intensity of signal beam reflected at the upper surface of the object.

Here, the at least partially absorbed signal beam has entered the surface material at the upper surface of the object and is subject to propagation through the surface material. It is internally reflected at a lower surface of the surface material facing away the interferometric measuring device, propagates again through the surface material and re-enters the measurement probe or as an at least partially absorbed signal beam.

Typically, for a given surface material and for a coating of a surface material provided on the surface of the object at least one of the first and the second center wavelength of the measurement beam is selected such, that the signal beam re-entering the measurement probe is dominated by radiation reflected by or on the upper surface of the surface material of the object. This way a portion of the object beam entering the surface material is effectively absorbed and a reflected signal beam portion thereof does no longer interfere or overlap with a signal beam portion reflected at the upper surface of the surface material.

In a further aspect there is provided a method of measuring a surface and/or profile of an object coated with a coating, wherein the coating comprises a surface material. The method of measuring the surface is an interferometric method, wherein object beam and a reference beam are branched off from a measurement beam. The center wavelength of the object beam is chosen such, that the object beam is effectively absorbed by the surface material of the object. In this way it can be guaranteed, that only light reflected from an upper or outer surface of a coating of the object will reenter a measurement probe for further interferometric signal analysis.

Insofar the method is characterized by choosing or providing a measurement beam featuring a desired center wavelength, for which the surface material of the object is effectively absorbent. In this way and with a rather thin coating of the surface material or when the object to be measured should be comparatively thin, e.g. when the object should comprise a thickness of less than 10 mm, less than 5 mm or less than 1 mm the center wavelength of the measurement beam is chosen with regard to the absorption coefficient or optical penetration depth of the surface material. This is of particular benefit since any reflections from a lower surface of the coating or lower surface of the object to be measured can be effectively avoided or suppressed.

With some examples the method as described above is to be conducted by an interferometric measuring device as described above. Insofar, all features, effects and benefits as described above in connection with the interferometric measuring device may equally apply to the method(s) of measuring the surface or profile of the object. Vice versa, also the measurement device as described above may be configured and adapted to conduct the method of measuring a surface or profile of an object as described above.

According to a further example the object to be measured comprises a coating on a surface. Here, it is the coating of the object that comprises the surface material. Typically, the entire coating of the object is made of the surface material. With other examples of outer or upper layer of the coating is made of the surface material. A major portion of the object beam entering the coating is absorbed by the coating when the object beam is directed onto the surface of the object. In this way, any reflections from a lower side of the coating or reflections from a lower side of the object facing away the measurement probe can be effectively avoided and suppressed.

According to a further example the coating of the object comprises or consists of silicon or diamond-like carbon DLC. When the object, e.g. in form of an optical element, such as a lens or mirror is coated, e.g. with a layer of silicon the method and the measurement device are typically implemented to provide a measurement beam comprising a substantial spectral component, i.e. a non-neglectable spectral component at a wavelength smaller than 550 nm. Preferably, the measurement beam comprises several spectral components, e.g. of a first center wavelength and of a second center wavelength, wherein the first and the second center wavelengths are both below 550 nm.

With typical examples and with a silicon coated or DLC coated object to be measured the measurement beam comprises a spectral component at a first and at a second center wavelength and optionally at a third center wavelength, wherein first, second and third center wavelengths are between 380 nm and 480 nm. In this way a portion of the object beam entering the coating is effectively absorbed and any reflections from a lower side of the coating can be effectively suppressed or avoided.

Brief description of the drawings

In the following, numerous examples of the measurement device and method of measuring a surface and/or profile of an object, such as an optical element are described in greater detail by making reference to the drawings, in which:

Detailed Description

Fig. 1     shows an example of an interferometric measuring device according to the present disclosure,

Fig. 2     shows a further implementation of the interferometric measuring device,

Fig. 3     is illustrative of an embodiment of a beam generating unit provided with a combiner unit,

Fig. 4     shows a further example of a beam generating unit and combiner unit in a further example,

Fig. 5     is illustrative of an optical delay unit,

Fig. 6     shows an example of the measurement probe,

Fig. 7     shows a diagram being illustrative of the optical absorption of the surface material of the object,

Fig. 8     is illustrative of another example of a beam generating unit,

Fig. 9     shows a further example of a beam generating unit,

Fig. 10    is a diagram illustrating the spectral distribution of the measurement beam,

Fig. 11    is illustrative of a beam divider unit in combination with a detector unit,

Fig. 12    shows another example of a spectral distribution of the measurement beam,

Fig. 13    shows an example of an optical diode arrangement, and

Fig. 14    shows a flowchart of a method of measuring a surface with the interferometric measuring device.

Detailed description

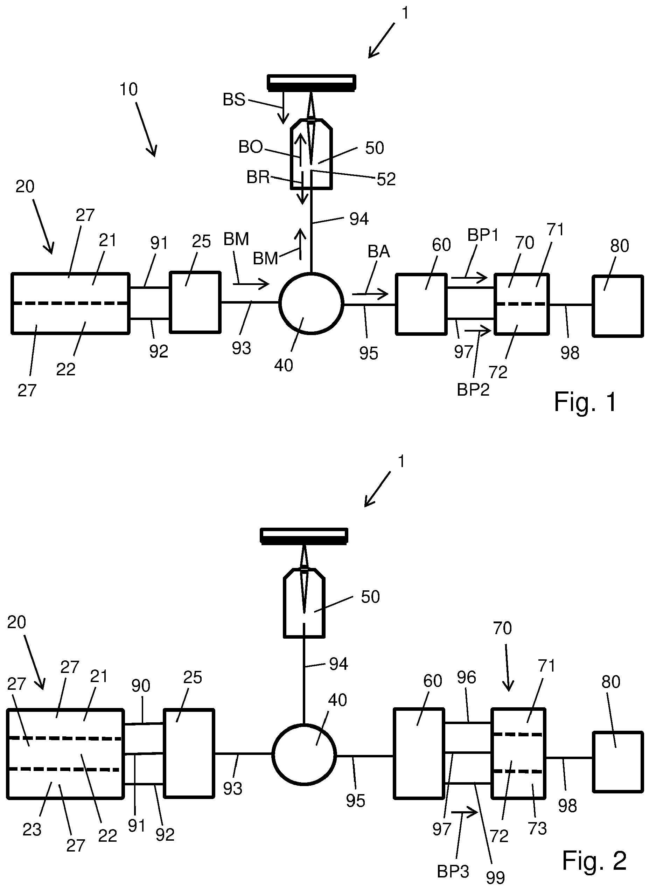

In Fig. 1 an interferometric measuring device 10 for measuring a surface 2, 4 or profile of an object 1 is schematically illustrated. The interferometric measuring device 10 comprises a beam generating unit 20 comprising at least a first light source 21. The first light source 21 is operable to generate a measurement beam BM having a spectral component at a wavelength smaller than 550 nm. Typically, the first light source 21 is operable to generate a measurement beam in the visual spectral range below 550 nm and above 380 nm.

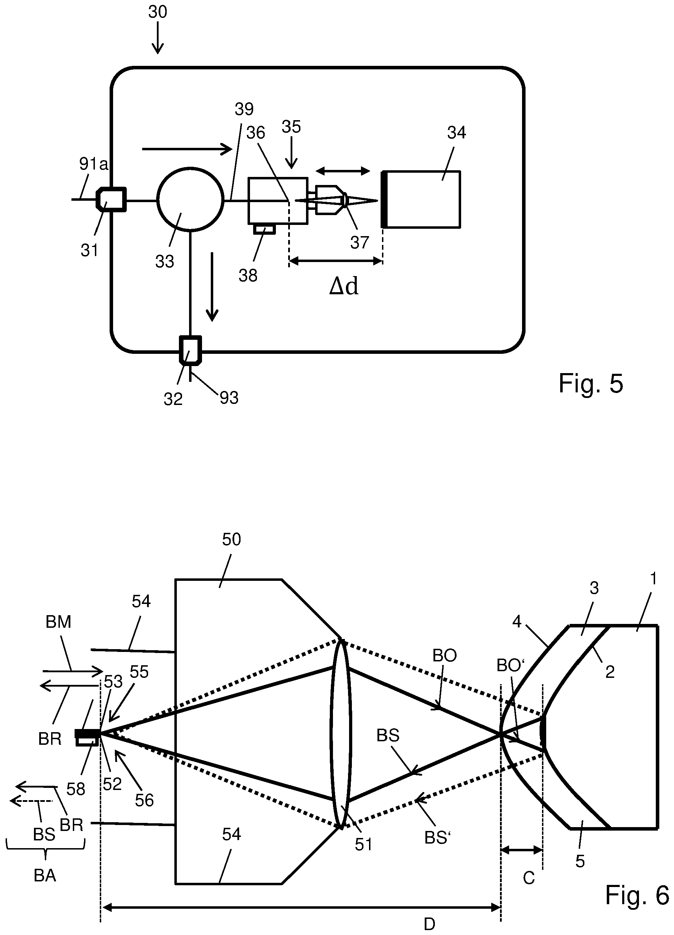

The interferometric measuring device further comprises a measurement probe 50 connected to the beam generating unit 20 through at least one optical fiber 91, 92, 93, 94. As illustrated in greater detail in Fig. 6 the measurement probe 50 comprises a splitter 55 by way of which the measurement beam BM as provided by the beam generating unit 20 is separated into an object beam BO and a reference beam BR.

It is only the object beam BO that is directed towards the surface 2, 4 of the object 1. There, i.e. on a surface 2, 4 of the object 1 the object beam BO is reflected as a signal beam BS and is recombined by a recombiner 56 with the reference beam BR. The signal beam BS recombined with the reference beam BR constitutes or forms the analysis beam BA. The analysis beam BA is transmitted from the measurement probe 50 towards a beam divider unit 60 as illustrated in Fig. 1.

The divider unit 60, which is connected to the measurement probe 50 through at least one optical fiber 94, 95 is operable to extract a first partial beam BP1 of a first center wavelength $\lambda_1$ and to derive a second partial beam BP2 of a second center wavelength $\lambda_2$ from the analysis beam BA. The first and the second partial beams BP1 and BP2 are separately provided and transmitted to a first detector 71 and to a second detector 72 of a detector unit 74. There, a wavelength selective detection of an interference of the analysis beam BA can be provided.

The individual detectors 71, 72 of the detector unit 70 are connected to a signal analyzer 80 via a transmission line 98. The signal analyzer 80 is configured to derive or to calculate a distance D between the measurement probe 50 and the surface 2, 4 on the basis of signals obtained from the at least first detector 71 and the at least second detector 72.

With the example as illustrated in Fig. 6 a fiber end face 52 of an optical fiber 94 by way of which the measurement probe 50 is connected to the beam generating unit 20 acts as a splitter 55. Hence, a portion of the measurement beam BM as provided by the beam generating unit 20 is reflected, i.e. internally reflected in the optical fiber 94 at the fiber end face 52. Another portion of the measurement beam BM propagates from the fiber through an optical element 51 and is directed towards and onto the surface 4, 2 of the object 1 as an object beam BO. Typically, the object beam BO is focused on a part of the respective surface 2, 4. The fiber end face 52 and hence the splitter 55 may be provided with a coating 53 to increase the internal reflectivity of the fiber end face 52. This way the intensity of the reference beam BR can be increased at the expense of the intensity of the object beam and hence of the signal beam.

A portion of the object beam BO is reflected from the surface 2, 4 to be measured and reenters the measurement probe 50 as a signal beam BS. Typically, the signal beam BS counter propagates the object beam BO. The signal beam BS enters the optical fiber 94 and is recombined with the reference beam BR. Accordingly, there is a runtime difference reflecting in a phase offset between the reference beam BR and the signal beam BS. This runtime difference is directly correlated to an optical path difference and hence to a distance D between the splitter 55 and the combiner 56 hence between the splitter 55 and the surface 4, 2 of the object 1.

With a varying distance, a respective interferometric signal of the resulting analysis beam BA is subject to a measurable change, which is detectable by the individual detectors 71, 72 and which signals from the detector 71, 72 are then subject to further signal analysis, thereby deriving or calculating a distance D between the measurement head 50 and the surface 4, 2 of the object 1.

With some examples the object 1 to be measured is provided with a coating 3 of a surface material 5.

The coating 3 and/or the surface material 5 may comprise silicon or diamond-like carbon DLC. The coating 3 and hence the layer of the surface material 5 facing towards the measurement probe 50 may comprise a thickness in a range of only a few micrometers, such as 5 to 10 $\mu$m, 10 to 20 $\mu$m, 10 $\mu$m to 100 $\mu$m, 50 $\mu$m to 150 $\mu$m, 100 $\mu$m to 200 $\mu$m, 150 $\mu$m to 250 $\mu$m or 100 $\mu$m to 300 $\mu$m. Making use of a measurement beam BA in the infrared spectral range may lead to numerous problems because the coating 3 is substantially transparent for electromagnetic radiation in this spectral range. Then, there may arise not only reflections on or from the outside surface 4 of the coating 3 but also for from an inside surface 2 of the coating 3 which is directly adjacent an in contact with an outside surface of the object 1 or optical element. It is then rather difficult to distinguish between a signal beam BS reflected from the outside surface 4 and a signal beam BS' reflected from a lower surface 2 or from the interface between the object 1 and the coating 3.

By selecting or designing the measurement beam to comprise a spectral component at a wavelength smaller than 550 nm the respective object beam BO propagating into and through the coating 3 is effectively absorbed. This way, the intensity of a signal beam BS' reflected at the interface between the object 1 and the coating 3 is reduced to a minimum and may no longer disturb detection and analysis of an interference of the analysis beam BA as produced by the recombination of the reflected signal beam BS and the reference beam BR.

Typically, the beam divider unit 60 is operable to generate or to derive first and second partial beams BP1, BP2, wherein the respective partial beams comprise a first and a second center wavelength $\lambda_2$ that is between 380 nm and 550 nm. In this way, it can be ensured, that only such object beams that have been reflected from the outside surface 4 of the coating 3 of the object 1 become subject to detection and to a subsequent signal analysis. Internal reflections from an inside surface 2 of the coating are effectively suppressed.

With some examples the measurement probe 50 comprises a housing 54. The housing 54 serves as a mount for the optical element 51, e.g. a collimating or focusing optical lens. The fiber end face 52 and hence the entire fiber 94 may be mounted and fixed to the housing 54. Optionally, there may be provided a transducer 58, such as a piezoelectric transducer or some other kind of a phase modulator by way of which the phase of the measurement beam BM can be periodically modified. Such a periodic modulation of the phase of the measurement beam and hence of the reference beam and the signal beam is beneficial for a precise measurement of a relative phase between the reference beam BR and the signal beam BS.

The interferometric measuring device 10 as illustrated in Fig. 1 is implemented by fiber optical components. The individual components of the interferometric measuring device 10 are optically connected through individual optical fibers 91, 92, 93, 94, 95, 96, 97, 99. By way of a fiber-optic implementation and a respective fiber optical connection of the individual components the entire interferometric measuring device is rather robust and stable. The interferometric measuring device typically comprises an optical coupler unit 40 connected to the beam generating unit 20 through an optical fiber 93, connected to the measurement probe 50 through another optical fiber 94 and connected to the divider unit 62 by a further optical fiber 95. The coupler unit 40 may be implemented as an optical circulator. With some embodiments or examples the coupler unit 40 comprises a fiber optical coupler, such as X-coupler.

Electromagnetic radiation provided by the optical fiber 93 is transmitted to the measurement probe 50 and through the further optical fiber 94. The analysis beam BA as captured and provided by the measurement probe 50 is transmitted through the same optical fiber 94 and propagates in the opposite direction. It is redirected to the beam divider unit 62 by the coupler unit 40.

Splitting of the measurement beam BM into the object beam BO and the reference beam BR is provided inside the measurement probe 54. Also, the recombination of the signal beam BS with the reference beam BR is provided at the fiber end face 52 of the measurement probe 50. With other examples, splitting of the measurement beam BM and recombination of the signal beam BS and the reference beam BO may be provided by other components of the interferometric measuring device 10. For instance, splitting of the measurement beam BM into the object beam BO and the reference beam BR may be provided by one of the beam generating unit 20 and the coupler unit 40. With other examples the recombination of the reference beam BR and the signal beam BS may be provided by the coupler unit 40 or by the beam divider unit 60.

Generally, the beam generating unit 20 comprises at least one light source 21 comprising a spectral component at a wavelength smaller than 550. With some examples the light source 21 is a rather broadband light source and provides a rather large spectral distribution of electromagnetic radiation. Then, the beam divider unit 60 is operable to derive or to extract first and second partial beams BP1, BP2 at first and second center wavelengths from the spectral distribution as provided by the first light source 21.

With other examples the beam generating unit 20 comprises a first light source 21 operable to emit electromagnetic radiation comprising a spectral component at the first center wavelength $\lambda_1$ and further comprises a second light source 22 operable to emit electromagnetic radiation comprising a spectral component at the second center wavelength $\lambda_2$. In this way, the spectral distribution of the electromagnetic radiation as produced or generated by the beam generating unit 20 is closely adapted to and may exactly match the first and the second center wavelengths of the first and second partial beams BP1, BP2 as extracted by the beam divider unit 60.

Preferably, the first light source 21 is operable to generate and to emit electromagnetic radiation at the first center wavelength and the second light source 22 is operable to generate and to emit, electromagnetic radiation at the second center wavelength. In this way, a signal-to-noise ratio at the detector unit 70 can be improved and the overall efficiency and efficacy of the interferometric measuring device 10 can be enhanced.

As further illustrated in Fig. 1 the beam generating unit 20 may comprise a combiner unit 25 or may be connected to a combiner unit 25. As illustrated in Fig. 1 the first light source 21 is connected to the combiner unit 25 by or through an optical fiber 91. The second light source 22 is individually and separately connected to the combiner unit 25 through and another optical fiber 92. Inside the combiner unit 25 the individual optical beams as generated by first and second light sources 21, 22 and provided by the respective optical fibers 91, 92 are combined in a single optical fiber 93 that enters the coupler unit 40.

With the further example as illustrated in Fig. 2 the setup of the interferometric measuring device 10 according to Fig. 1 has been expanded to a third center wavelength $\lambda_3$. Here, the detector unit 70 comprises a first detector unit 71 one for a first center wavelength $\lambda_1$, a second detector unit 72 for a second center wavelength $\lambda_2$ and a third detector 73 for a third center wavelength $\lambda_3$, wherein the respective center wavelengths differ with respect to each other.

The individual detector 71, 72, 73 may be separately or commonly connected to the signal analyzer 80 through an electrical signal line 98, by way of which electronic or electric signals as generated by the individual detectors 71, 72, 73 are transmitted to the electronic or electronically implemented signal analyzer 80.

As it is further apparent from Fig. 2 and in order to provide a multi-wavelength selective analysis of the analysis beam BA the beam divider unit 60 is operable to extract not only a first and a second but also a third partial beam BP3 from the analysis beam as provided by the optical fiber 95. The three partial beams BP1, BP2 and BP3 are individually transmitted through individual optical fibers 96, 97, 99 to the respective first, second and third detectors 71, 72, 73. Depending on the type of light source 21, 22, 23 implemented with the generating unit 20 different center wavelength may be extracted from the analysis beam BA.

With the example of Fig. 2 the beam generating unit 20 comprises three individual light sources 21, 22, 23. Here, the first light source 21 is operable to generate and to emit electromagnetic radiation at the first center wavelength. The second light source 22 is operable to generate and to emit electromagnetic radiation at the second center wavelength and the third light source 23 is operable to generate and to emit electromagnetic radiation at the third center wavelength.

The separate light sources 21, 22, 23 are individually coupled to the combiner unit 25 by respective optical fibers 90, 91, 92. In or with the combiner unit 25, the individual light sources and their electromagnetic radiation as provided by three individual optical fibers 90, 91, 92 are combined in a single optical fiber 93 by way of which the combined or superimposed electromagnetic radiation is transmitted to the coupler unit 40.

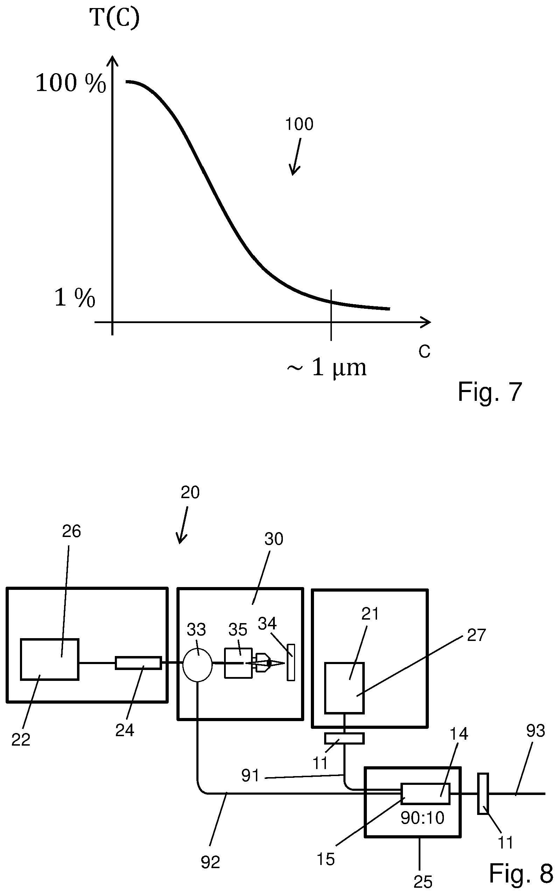

The optical combiner unit 25 may comprise an optical coupler 15, e.g. implemented as a fiber optical combiner 14 as illustrated in Fig. 8. With the combiner unit and hence with the optical combiner 14 electromagnetic light intensity as provided by a first and a second optical fibers can be combined in a single output fiber.

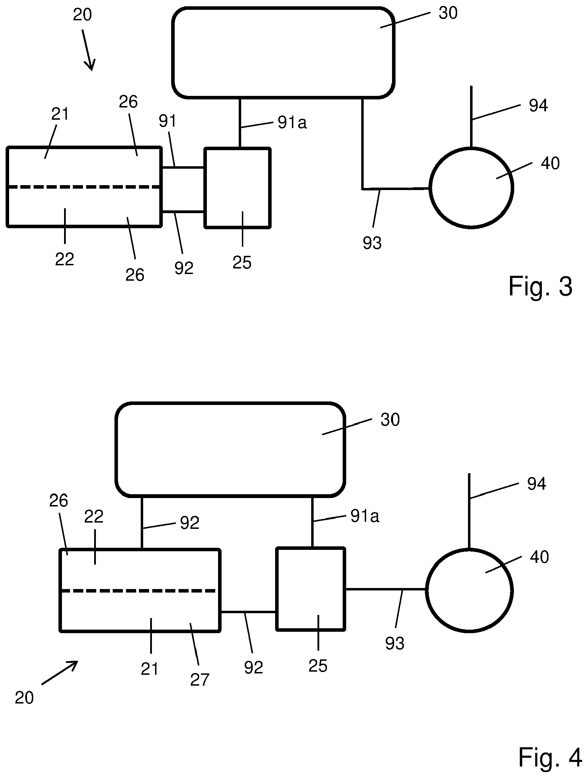

With some examples the individual light sources 21, 22, 23 are implemented as a laser light source 27 or as a luminescent diode SLD 26. With the example of Fig. 1 both light sources 21, 22 are implemented as a laser light source 27. Likewise, and with the example of Figs. 2 and 4 at least one of the light sources 21, 22, 23 is implemented as a laser 27. Alternatively, the at least one of the light source 21, 22, 23 may be implemented as a SLD or as a whitelight source.

With the example of Fig. 3 the first light source 21 and the second light source 22 are both implemented as a SLD. Here, radiation as generated by the first light source 21 is transmitted to the combiner unit 25 through an optical fiber 91. Light generated by the second SLD light source 22 is transmitted through another optical fiber 92 into and towards the combiner unit 25. Inside the combiner unit 25 the respective beams as provided by the separate optical fibers 91, 92 are combined and co-propagate through a further optical fiber 91a into an optical delay unit 30.

The optical delay unit 30 is an optional component of the interferometric measuring device 10 and is typically provided for such examples of the device 10, wherein at least one light source 21, 22, 23 is implemented as a light source of a comparative low spatial coherence, such as a SLD. The delay unit 30 is further connected to the coupler unit 40 via the optical fiber 93 as described before.

With the further example as illustrated in Fig. 4, the beam generating unit 20 comprises a first light source 21 implemented as a laser light source 27. The beam generating unit 20 further comprises a second light source 22 implemented as a SLD 26. Here, the output of the first light source 21 is directly connected to the combiner unit 25 through the optical fiber 91. An output of the second light source 22 is connected to the delay unit 32 via the optical fiber 92. An output of the delay unit 30 is connected to the combiner unit 25.

The delay unit 30 serves to impose an artificial phase or delay onto the spectral component of the measurement beam BM that has been generated by the light source 22 of low coherence. Typically, and when making use of low coherence light the optical path difference D between the reference beam BR and the signal beam BS may be larger than the coherence length of the electromagnetic radiation as produced by the respective light source.

Then, the two beams can no longer interfere and respective interferometric distance measurement would be no longer possible. With an optical delay unit 30 as illustrated in greater detail in Fig. 5 there can be imposed an artificial and adjustable delay onto the reference beam so that a portion of the reference beam that is provided with an artificial delay substantially matches the distance D between the measurement probe 50 and the surface 2, 4 measured.

The delay unit 30 as illustrated in Fig. 5 comprises an input 31 connected to an optical fiber 91a as illustrated in Fig. 3 or connected to an optical fiber 92 as illustrated in Fig. 4. Internally, the delay unit 30 comprises a fiber optical coupler 33, by way of which the incident light is directed into a delay head 35. The delay head 35 may comprise an optical element 37, such as a focusing lens by way of which the incident light is directed onto a reflector 34, e.g. implemented as a mirror or implemented as a retro-reflecting element. The delay head 35 is connected to the input 31 and/or to the fiber optical coupler 33 by another optical fiber 39. Between the delay head 35 and the reflector 34 the respective optical beam is subject to free propagation.

A fiber end face 36 of the optical fiber 39 terminating in the delay head 35 is fixed to the delay head 35. The delay head 35 is movable along the optical axis or relative to the reflector 34. Again, and in a similar way as described above in connection with the measurement probe 50 the end face 36 of the optical fiber 39 serves as a splitter for the electromagnetic radiation as provided by the optical fiber 39. A portion of the electromagnetic radiation is retroreflected by the fiber end face 36 and another portion of the respective electromagnetic radiation is reflected by the reflector 34 and is captured by the delay head 35. Optionally, the delay head 35 may be subject to periodic modulations by way of a transducer 38 or any other type of a phase modulator. When the measurement beam BM entirely propagates through the optical delay unit 30 the transducer 38 or phase modulator may replace or substitute a transducer 58 or phase modulator 58 of the measurement probe 50.

This way, an adjustable and modifiable delay Δd can be imposed on a reference beam BR. Light reflected from the reflector 34 is captured by the delay head 35 and reenters the coupler 33. From there, the captured light propagates from the coupler 33 towards an output 32, which is connected in a light transmissive manner with the optical fiber 93 and hence directly with the coupler unit 40 as illustrated in Fig. 3.

Alternatively, and as shown in Fig. 4, the output 32 of the delay unit 30 may be connected to the optical fiber 91a and may enter the combiner unit 25 so as to recombine with a further spectral component as provided by the laser light source 27. In Fig. 7, there is schematically illustrated a diagram 100 being illustrative of the absorption of the coating 3 as provided on the surface 2 of the object 1. The coating 4 comprises a surface material 5. The surface material 5 comprises a layer with a thickness C. The layer thickness C may be in a range of a few micrometers. With some examples the layer thickness Is smaller than 5 μm, smaller than 10 μm, smaller than 20 micrometers, smaller than 50 μm or smaller than 100 μm. With some examples the thickness C of the coating 5 may be even smaller than 1 μm.

Typically, and with some examples the measurement beam BM comprises a center wavelength or at least a spectral component at a wavelength that is smaller than 550 nm. In this spectral range, the surface material 5 is substantially absorbent for the respective electromagnetic radiation. As illustrated in the diagram 100 of Fig. 7 the transmitted light intensity over layer thickness C drops to about 1% after propagation through the surface material 5 of about one 1 μm. In effect and by making use of a measurement beam with a spectral component at a wavelength smaller than 550 nm the coating 3 and the respective surface material 5, e.g. in form of silicon or DLC is substantially absorbent so that the contribution of light reflected as a signal beam BS' from a lower surface 2 of the coating 3 is neglectable.

Fig. 8 shows the embodiment according to Fig. 4 in a more detailed illustration. Here, the beam generating unit 20 comprises a first light source 21 implemented as a laser 27. The beam generating unit 20 comprises a second light source 22 implemented as a SLD 26. The SLD 26 is connected to an optical isolator or optical diode 24 in order to avoid any reflections or back scattering into the light source 22. An output of the optical diode 24 is connected to the optical delay unit 30. Here, the optical beam as generated by the second light source 22 is subject to a variable and tunable optical delay as described above in connection with Fig. 5

The first light source 21 is a laser light source 27. It is connected to an optical fiber 91 by a fiber optical coupler 11. An output of the delay unit 30 is provided with the optical fiber 92. The two optical fibers 91, 92 enter the combiner unit 25. The combiner unit 25 comprises a fiber optical coupler 15, e.g. implemented as a fiber optical combiner 14. The fiber optical coupler 15 is typically implemented as a combiner, which due to the different types of light sources 21, 22 may be asymmetric with regard to the degree of cross talk or fiber optical coupling.

In the present example the light intensity as provided by the first light source 21 is about 10 times larger than the light intensity as provided by the second light source 22. In accordance to the different light intensities of the various light sources 21, 22 the mixing ratio of the fiber optical combiner 14 is appropriately designed and configured so that the spectral components of the individual light sources 21, 22 are substantially equally distributed in the output optical fiber 93, which is connected to the output of the optical combiner unit 25 through or by another fiber optical coupler 11.

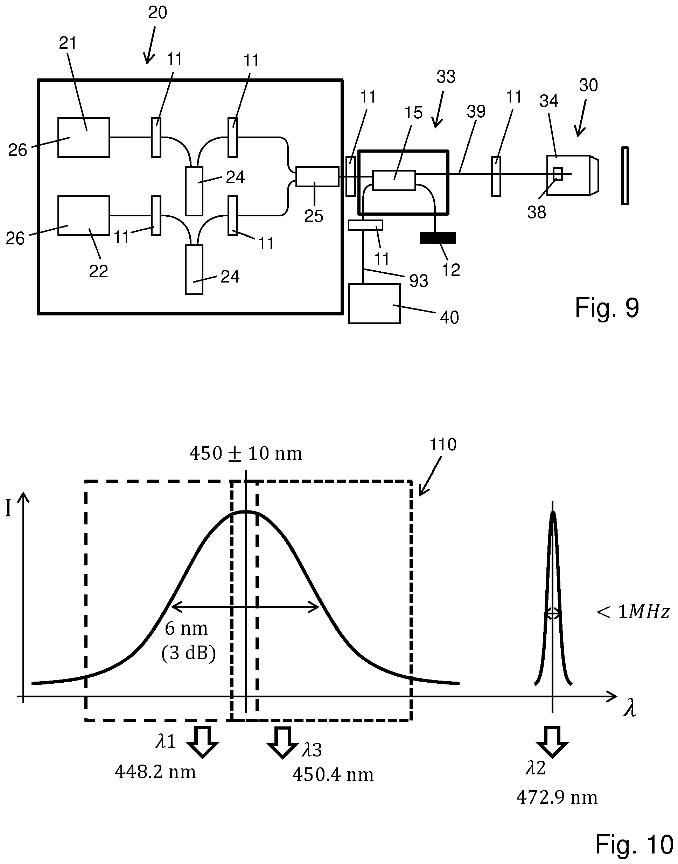

In a further example as illustrated in Fig. 9 the beam generating unit 20 comprises a first light source 21 and a second light source 22, wherein both light sources 21, 22 are implemented as SLD 26. Here, the individual light sources 21, 22 are both provided with an optical diode 24, which is provided between the combiner unit 25 and the respective light sources 21, 22. The optical diode 24 is fiber optically implemented. It is connected to the optical fibers of the light sources 21, 22 as well as with the optical fiber of the combiner unit 25 by respective fiber optical couplers 11.

The output of the combiner unit 25 is connected with the delay unit 30 comprising a coupler 33, e.g. implemented as a fiber optical x-coupler 15. An output of the coupler 15 is connected to the delay head 35 via the optical fiber 39. Another output of the coupler 15 may be connected to the optical fiber 93, which in turn is connected or is connectable with the coupler unit 40 and/or with the measurement probe 50. A further output of the coupler 12 may be provided with a beam trap 12.

The specific choice of different light sources 21, 22, 23 and their mutual optical coupling depends on the type of a coating 3 of the object 1 to be measured. It may further depend on the availability of commercial available light sources and perspective light guiding optical components, such as optical fibers, couplers and combiners.

In the illustration of Fig. 10 there is shown a diagram 110 illustrating the spectrum of a measurement beam when making use of a superluminescent diode 26 as a first light source 21 and when making use of a laser 27 as a second light source 22. As shown, the superluminescent diode 26 and hence the first light source 21 provide a rather broadband spectrum in the region of 550 nm. The spectral width of the electromagnetic radiation generated and provided by the SLD may be about 6 nm at 3 dB.

Compared to that, the second light source 21 is configured to emit electromagnetic radiation at a second center wavelength, e.g. at 472.9 nm. The radiation emitted by the laser light source is of comparatively long coherence and exhibits a rather small bandwidth, e.g. less than 1 MHz (FWHM).

Since the first light source 21 provides a rather broadband optical signal, there can be chosen the first center wavelength and the third center wavelength from the emitted spectrum. This can be provided by appropriate filters having a respective center wavelength, e.g. at 448.2 nm and 450.4 mm thus defining a first and a third center wavelength. Here, the third center wavelength is located rather close to the first center wavelength, thus leading to a comparatively large synthetic wavelength composed of first and third center wavelengths.

The second center wavelength is provided at a well-defined spectral distance from at least one of the first and the second center wavelengths. Here, another synthetic wavelength, e.g. on the basis of the first center wavelength and on the basis of the second center wavelength can be artificially generated for the interferometric analysis of the analysis beam BA.

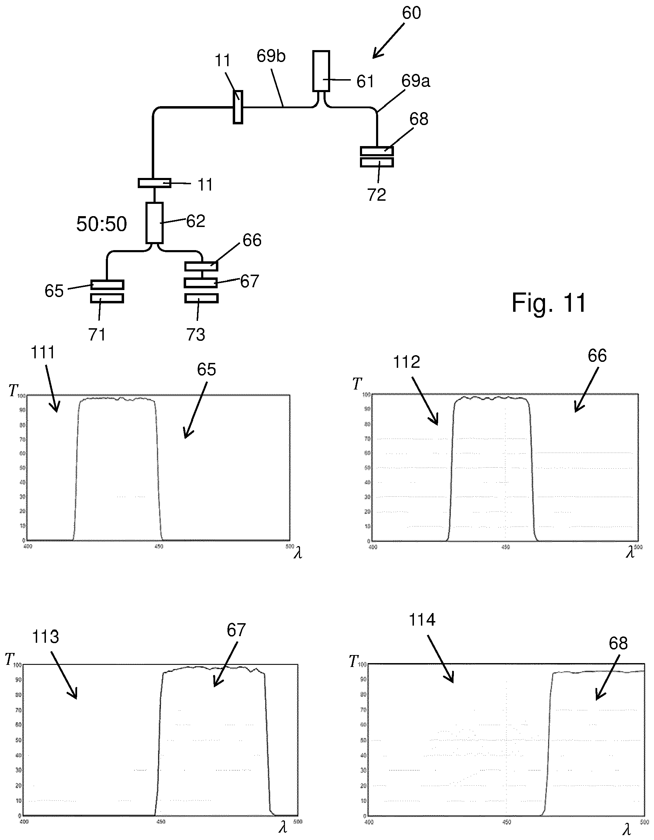

In Fig. 11 there is shown an example of a divider unit 60 particularly implemented for a wavelength division of a measurement beam composed of electromagnetic radiation of a superluminescent diode 26 and electromagnetic radiation as generated and emitted by a laser 27. Here, the divider unit 60 comprises a wavelength division multiplexer 61 featuring a first output 69a and a second output 69b. The first output 69a is connected to an optical filter 68 configured to transmit radiation of the second center wavelength, hence radiation as produced by the laser 27. Downstream of the optical filter 68 there is provided a second detector 72 of the detector unit 70.

The second branch or the second output 69b of the WDM 61 is connected via a fiber optical coupler 11 and by way of a further optical fiber with a fiber optical splitter 62, operable to split the beam as provided by the second output 69b into equal or different branches or portions. Here, a first output of the splitter 62 is directed onto a filter 65 and subsequently onto a first detector 71. A second output 64 of the splitter 62 is directed onto a filter 66 and further onto a filter 67 and finally onto a third detector 73. The filter 68 in front of the second detector 72 is implemented as a protective filter for the detector 72. It is operable and/or configured to suppress the spectral components as generated by the SLD. Likewise, the filter 65 in front of the first detector 71 is operable to suppress spectral components of the laser light source 27. The illustrated cascade of optical filters 66, 67 in front of the third detector 73 serves to protect the respective detector against any perturbations. Here and since the third center wavelength is closer to the second center wavelength of the laser light source than the first center wavelength the optical filter 66 is implemented to suppress spectral components of the laser light source 27.

The further optical filters 67 is then configured to suppress any further spectral components of light outside the third center wavelength.

In the numerous diagrams 111, 112, 113 and 114 there are provided examples of the transmission and filter efficiency of the various filters 65, 66, 67 and 68 as described above in connection with Fig. 11. The filter 65 is operable to suppress spectral components at a wavelength larger than or 450 nm. The filter 66 is operable to suppress electromagnetic radiation at a wavelength in the spectral region around 420 nm. The optical filter 67 is operable to transmit spectral components in a range between 450 nm and 490 nm. It is operable to provide and to transmit the third partial beam at the third center wavelength, e.g. around 450 nm.

The optical filter 68 as illustrated by the diagram 114 is particularly operable to suppress any spectral component at a wavelength smaller than 460 nm.

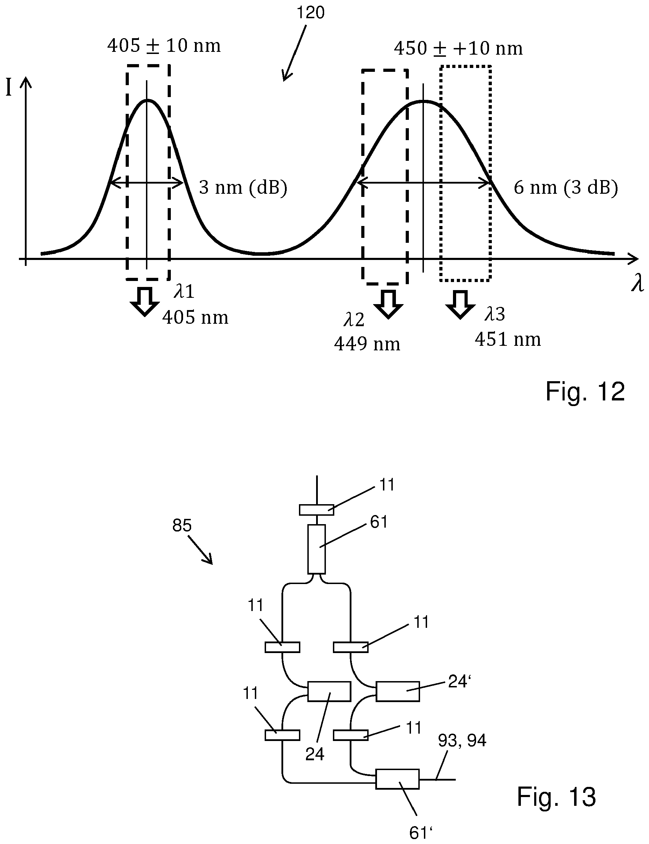

With the further example as illustrated in Fig. 12 there are provided two individual first and second light sources 21, 22 being both implemented as a SLD. Here, the first light source 21 is operable to emit electromagnetic radiation in a spectral region around 405 nm. The second SLD light source 22 is operable to emit electromagnetic radiation at about 450 nm. As illustrated in the diagram 120 of Fig. 12 the first center wavelength is about 405 nm, the second center wavelength is about 449 nm and the third center wavelength is about 451 nm. Here, the second and third center wavelengths are operable to generate a rather large and synthetic wavelength thus allowing to increase the absolute measurement range of the interferometric measuring device.

The beam divider unit 64 and the setup of the beam generation unit 20 as indicated in Fig. 12 may be somewhat identical to the schematic illustration of Fig. 11. Of course, the respective optical filters are selected in close correspondence to the center wavelength of the beam generating unit 20.

Superluminescent diodes SLD 26 as described and proposed herein are rather sensitive to internal reflections that may occur in the interferometric measuring device 10. In order to suppress any reflections or internal reflections propagating back into the SLD there may be provided an optical diode arrangement 85 as illustrated in Fig. 13. The optical diode arrangement 85 may be provided between the beam generating unit 20 and any one of the measurement probe 50 and the coupler unit 40. The optical diode arrangement 85 may comprise a wavelength division multiplexer 61, by way of which entering light may be separated into a first fiber optical branch and into a second fiber optical branch. The first branch may comprise an optical diode 24 and the second branch may comprise another optical diode 24'.

The optical diodes 24, 24' are connected to the wavelength division multiplexer 61 in order to separate the at least two spectral components of the measurement beam BM into two separate optical fibers and respective fiber optical couplers 11. The output of the optical diodes 24, 24' is again recombined by another WDM 61'. An output of the WDM 61' can be coupled or connected to one of the coupler unit 40 and the measurement probe 50 through an optical fiber 93, 94. The optical diode arrangement 85 as illustrated in Fig. 13 is of particular benefit since the incoming light is separated into a first spectral component and into a second spectral component, wherein the first spectral component propagates through the first branch and the first optical diode 24 and wherein the second optical component propagates through the second branch and hence through the second optical diode 24'.

In this way a wavelength selective optical diode arrangement is provided that serves to prevent any back reflections or any back scattering in the fiber optical system for each of the spectral components.

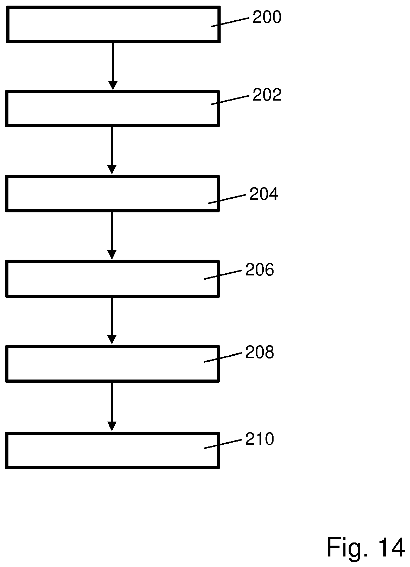

In Fig. 14 the method of measuring a surface 2, 4 or profile of the object 1 is schematically illustrated. Here and in a first step 200 the measurement beam BM is generated by the beam generating unit 20 as described above. In a further step 202 there is branched off an object beam BO and a reference beam BR from the measurement beam as provided in the previous step 200.

In step 204 the object beam BO is directed onto the surface 2, 4 of the object 1 to be measured. In step 206 a portion of the object beam BO propagating into the surface material 5 of the object 1 is absorbed and in step 208 it is only a portion of the object beam BO reflected from the outside surface of the object 1 or coating 3 that reenters the measurement probe 50. Thereafter and in step 210 the reflected portion of the object beam BO reentering the measurement probe as a signal beam BA is recombined with the reference beam BR and is then used for interferometric signal analysis in order to determine or to derive a distance D between the optical probe 50 and the surface of the object.

Reference Numbers

**[0163]**

| | |
|---|---|
| 1 | object |
| 2 | surface |
| 3 | coating |
| 4 | coating surface |
| 5 | surface material |
| 10 | measurement device |
| 11 | coupler |
| 12 | beam trap |
| 14 | combiner |
| 15 | coupler |
| 20 | beam generating unit |
| 21 | light source |
| 22 | light source |
| 23 | light source |
| 24 | optical diode |
| 25 | combiner unit |
| 26 | super luminescent diode |
| 27 | laser |
| 30 | optical delay unit |
| 31 | input |
| 32 | output |
| 33 | coupler |
| 34 | reflector |
| 35 | delay head |
| 36 | fiber end face |
| 37 | optical element |
| 38 | transducer |
| 39 | optical fiber |
| 40 | coupler unit |
| 50 | measurement probe |
| 51 | optical element |
| 52 | fiber end face |
| 53 | coating |
| 54 | housing |
| 55 | splitter |
| 56 | recombiner |
| 58 | transducer |
| 60 | divider unit |
| 61 | WDM |
| 62 | splitter |
| 63 | output |
| 64 | output |
| 65 | filter |
| 66 | filter |

67    filter
68    filter
69    output
70    detector unit
71    detector
72    detector
73    detector
80    signal analyzer
85    optical diode arrangement
90    optical fiber
91    optical fiber
92    optical fiber
93    optical fiber
94    optical fiber
95    optical fiber
96    optical fiber
97    optical fiber
98    transmission line
99    optical fiber
100   diagram
110   diagram
111   diagram
112   diagram
113   diagram
114   diagram
120   diagram

**Claims**

1. An interferometric measuring device (10) for measuring a surface (2, 4) or profile of an object (1), the measuring device (10) comprising:

   - a beam generating unit (20) comprising at least a first light source (21), wherein the beam generating unit (20) is operable to generate a measurement beam (BM) with a spectral component at a wavelength smaller than 550 nm,
   - a splitter (55) to branch off an object beam (BO) and a reference beam (BR) from the measurement beam (BM),
   - a measurement probe (50) coupled to the beam generating unit (20) in a light transmitting way and configured to direct the object beam (BO) onto the surface (2, 4) and to capture a portion of the object beam reflected from the surface (2, 4) as a signal beam (BS),
   - an optical beam recombiner (56) operable to recombine the signal beam (BS) and the reference beam (BR) in an analysis beam (BA),
   - a beam divider unit (60) coupled to the recombiner (56), the beam divider unit (60) being operable to extract a first partial beam (BP1) of a first center wavelength $\lambda_1$ from the analysis beam (BA) and to extract a second partial beam (BP2) of a second center wavelength $\lambda_2$ from the analysis beam (BA), wherein the second

   center wavelength $\lambda_2$ is different from the first center wavelength $\lambda_1$,
   - a detector unit (70) coupled to the beam divider unit (60) and comprising at least a first detector (71) to detect the first partial beam (BP1) and comprising at least a second detector (72) to detect the second partial beam (BP2),
   - a signal analyzer (80) connected to the detector unit (70) and operable to derive a distance (D) between the measurement probe (50) and the surface (2, 4) on the basis of signals obtained from the at least first detector (71) and the at least second detector (72).

2. The measurement device (10) according to claim 1, wherein the beam generating unit (20) comprises a second light source (22), the second light source (22) being operable to emit electromagnetic radiation comprising a spectral component at the second center wavelength $\lambda_2$.

3. The measurement device (10) according to claim 1 or 2, wherein the beam divider unit (60) is operable to extract a third partial beam (BP3) of a third center wavelength $\lambda_3$ from the analysis beam (BA), wherein the third center wavelength $\lambda_3$ is different from the first center wavelength $\lambda_1$ and different from the second center wavelength $\lambda_2$ and wherein the detector unit (70) comprises a third detector (73) to detect the third partial beam (BP3).

4. The measurement device (10) according to claim 3, wherein the beam generating unit (20) comprises a third light source (23), the third light source (23) being operable to emit electromagnetic radiation comprising a spectral component at the third center wavelength $\lambda_3$.

5. The measurement device (10) according to any one of the preceding claims, wherein the first light source (21) comprises one of a laser (27) and a superluminescent diode SLD (26).

6. The measurement device (10) according to any one of the preceding claims, wherein the at least one light source (21, 22, 23) comprises a superluminescent diode (27) and wherein the measurement device (10) further comprises an optical delay unit (30) coupled to the at least one light source (21, 22, 23), the optical delay unit (30) being operable to impose a phase shift of variable and adjustable size onto at least one of the measurement beam (BM), the signal beam (BS), the object beam (BO) and the reference beam (BR).

7. The measurement device (10) according to any one of the preceding claims, wherein the first center wavelength $\lambda_1$ and the second center wavelength $\lambda_2$

fulfill the following equation:

$$\lambda_{SM} = n \cdot \lambda_1 = \frac{\lambda_1 \cdot \lambda_2}{|\lambda_1 - \lambda_2|} = m \cdot \lambda_2 \,,$$

wherein $1 \leq n,m \leq 50$.

8. The measurement device (10) according to any one of the preceding claims 3 to 7, wherein the third center wavelength $\lambda_3$ and one of the first and the second center wavelength $\lambda_i$ fulfill the following equation:

$$\lambda_{SG} = k \cdot \lambda_i = \frac{\lambda_i \cdot \lambda_3}{|\lambda_i - \lambda_3|} = l \cdot \lambda_3,$$

wherein $i$ = 1 or 2 and $10 \leq k,l \leq 2.500$.

9. The measurement device (10) according to any one of the preceding claims 3 to 8, wherein the first center wavelength $\lambda_1$, the second center wavelength $\lambda_2$, and the third center wavelength $\lambda_3$ are in:

- a spectral range between 380 nm and 490 nm,
- in a spectral range between 400 nm and 460 nm,
- in a spectral range between 404 nm and 455 nm,
- in a spectral range between 449 nm and 511 nm,
- in a spectral range between 449 and 489 nm, or
- in a spectral range between 404 and 475 nm.

10. The measurement device (10) according to any one of the preceding claims, wherein the object (1) comprises a material on its surface (2, 4) that is substantially absorbent for electromagnetic radiation of at least one of the first and the second center wavelengths $\lambda_1$, $\lambda_2$.

11. The measurement device (10) according to any one of the preceding claims, further comprising a coupler unit (40) coupled to the beam generating unit (20) in a light transmitting way, coupled to the measurement probe (50) and coupled to the divider unit (60), the coupler unit (40) being configured to direct the measurement beam (BM) from the beam generating unit (20) to the measurement probe (50) and to direct the analysis beam (BA) from the measurement probe (50) to the divider unit (60).

12. The measurement device (10) according to any one of the preceding claims, wherein the divider unit (60) comprises at least one of:

i) a wavelength division multiplexer WDM (61) and

ii) a fiber splitter (62) with a first output (63) connected to a first optical filter (65) and a second output (64) connected to a second optical filter (66).

13. A method of measuring a surface (2, 4) or profile (P) of an object (1), the method comprising the steps of:

- providing the object (1), wherein the object (1) comprises a surface material (5),
- generating a measurement beam (BM) with a beam generating unit (20),
- branching off an object beam (BO) and a reference beam (BR) from the measurement beam (BM) and directing the measurement beam (BM) onto the surface (2, 4) of the object (1) by an optical probe (50), wherein the surface material comprises an optical penetration depth of less than 100 $\mu$m, less than 50 $\mu$m, less than 20 $\mu$m, 10 $\mu$m, less than 5 $\mu$m, less than 2 $\mu$m, less than 1 $\mu$m, less than 0.5 $\mu$m or less than 0.1 $\mu$m for one of the object beam (BO) and the measurement beam (BM),
- capturing a portion of the measurement beam (BM) reflected by the surface (2, 4) as a signal beam (BS),
- recombining the signal beam (BS) and the reference beam (BR) in an analysis beam (BA) and
- detecting an interference of the analysis beam (BA) by a detector unit (70) and deriving a distance (D) between the optical probe (50) and the surface (2, 4) by analyzing signals of the detector unit (70).

14. The method according to claim 13, wherein the object (1) comprises a coating (3) on its surface (2) comprising the surface material (5) and wherein a major portion of the object beam (BO) entering the coating (3) is absorbed by the coating (3).

15. The method according to claim 14, wherein the coating (3) comprises or consists of silicon or diamond-like carbon DLC.

Fig. 1

Fig. 2

Fig. 3

Fig. 4

Fig. 5

Fig. 6

T(C)

100 %

1 %

100

~ 1 μm

C

Fig. 7

20

26

30

33  35  34

21

27

22

24

11

91

14

93

90:10

15

11

92

25

Fig. 8

Fig. 9

450 ± 10 nm

110

6 nm
(3 dB)

< 1MHz

λ1
448.2 nm

λ3
450.4 nm

λ2
472.9 nm

Fig. 10

Fig. 11

Fig. 12

Fig. 13

Fig. 14

Europäisches
Patentamt

European
Patent Office

Office européen
des brevets

# EUROPEAN SEARCH REPORT

Application Number

EP 21 18 4706

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 467 429 A1 (CKD CORP [JP]) 10 April 2019 (2019-04-10) | 1-5, 7-10, 13-15 | INV. G01B9/02 G01B11/24 |
| A | * abstract; figures 1, 2 * * paragraphs [0001], [0108] - paragraph [0296] * ----- | 11,12 | G01B11/06 |
| X | KUMAR U. PAUL ET AL: "Red-Green-Blue wavelength interferometry and TV holography for surface metrology", JOURNAL OF OPTICS, vol. 40, no. 4, 1 December 2011 (2011-12-01), pages 176-183, XP055866282, New Delhi ISSN: 0972-8821, DOI: 10.1007/s12596-011-0051-z Retrieved from the Internet: URL:https://link.springer.com/content/pdf/ 10.1007/s12596-011-0051-z.pdf> | 1-7,9,10 | |
| Y | * page 176 - page 178 * ----- | 11,12 | TECHNICAL FIELDS SEARCHED (IPC) |
| X | US 2005/083537 A1 (KUCHEL MICHAEL [DE]) 21 April 2005 (2005-04-21) | 1,2,5,6, 9,10 | G01B |
| Y | * abstract; figures 1, 2 * * paragraph [0026] - paragraph [0037] * ----- | 11,12 | |
| Y | EP 3 789 727 A1 (TAYLOR HOBSON LTD [GB]) 10 March 2021 (2021-03-10) * the whole document * ----- | 11,12 | |

The present search report has been drawn up for all claims

| Place of search | Date of completion of the search | Examiner |
|---|---|---|
| Munich | 1 December 2021 | Stanciu, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 18 4706

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2021

| Patent document cited in search report | | Publication date | Patent family member(s) | | | Publication date |
|---|---|---|---|---|---|---|
| EP 3467429 | A1 | 10-04-2019 | CN | 108713127 | A | 26-10-2018 |
| | | | EP | 3467429 | A1 | 10-04-2019 |
| | | | JP | 6279013 | B2 | 14-02-2018 |
| | | | JP | 2017211287 | A | 30-11-2017 |
| | | | KR | 20190011229 | A | 01-02-2019 |
| | | | TW | 201741616 | A | 01-12-2017 |
| | | | US | 2019094016 | A1 | 28-03-2019 |
| | | | WO | 2017203756 | A1 | 30-11-2017 |
| US 2005083537 | A1 | 21-04-2005 | EP | 1682851 | A2 | 26-07-2006 |
| | | | JP | 4963231 | B2 | 27-06-2012 |
| | | | JP | 2007509321 | A | 12-04-2007 |
| | | | US | 2005083537 | A1 | 21-04-2005 |
| | | | WO | 2005043073 | A2 | 12-05-2005 |
| EP 3789727 | A1 | 10-03-2021 | NONE | | | |

EPO FORM P0459

For more details about this annex : see Official Journal of the European Patent Office, No. 12/82